# EUROPÄISCHE PATENTANMELDUNG

(11) **EP 2 073 305 A1**
(43) Veröffentlichungstag der Anmeldung: **24.06.2009**
(21) Anmeldenummer: 08015507.0
(22) Anmeldetag: 03.09.2008
(51) Int. Cl.: H01Q 1/12, H01Q 1/32, H01Q 1/48, H01Q 1/50, H02G 13/00

(54) **Blitzschutzeinrichtung an einem Fahrzeugaufbau, insbesondere einer Fahrzeugantenne**

(30) Priorität: 21.12.2007 DE 102007062857
(71) Anmelder: Krauss-Maffei Wegmann GmbH & Co. KG, 80997 München (DE)
(72) Erfinder: Föhst, Stefan, Dipl-Ing., 34376 Immenhausen (DE); Hannig, Manfred, 34479 Beuna-Oberlistingen (DE)
(74) Vertreter: Feder Walter Ebert

(57) **Zusammenfassung**

Blitzschutzeinrichtung an einem Aufbau, insbesondere einer Antenne (1), eines Fahrzeugs, wobei der Aufbau einen Massekörper (14) aufweist, der zum Blitzschutz mit dem Fahrzeuggehäuse (2) elektrisch leitend verbunden ist und wobei der Aufbau über einer Öffnung (3) des Fahrzeugs angeordnet ist, und wobei der Massekörper (14) über ein Dichtungselement, insbesondere einen Dichtungsring (5), aus Metall, das einen dichten, insbesondere gasdichten, Verschluss der Öffnung (3) des Fahrzeugs bewirkt, mit dem Fahrzeuggehäuse (2) elektrisch leitend verbunden ist.

## Beschreibung

Die Erfindung betrifft eine Blitzschutzeinrichtung an einem Fahrzeugaufbau, insbesondere einer Fahrzeugantenne, vorzugsweise an einem Militärfahrzeug, mit den Merkmalen aus dem Oberbegriff des Patentanspruchs 1. Fahrzeugaufbauten können beispielsweise Geräteträger, Gehäuse, Deckel oder Fahrzeugantennen sein. Fahrzeugantennen sind in der Regel über einer Öffnung des Fahrzeuggehäuses angeordnet, damit die Signalleitung der Antenne in den Innenraum des Fahrzeugs geführt werden kann. Insbesondere bei militärischen Fahrzeugen müssen solche Öffnungen wasserdicht (für Tauchfahrten) oder gasdicht (zum Schutz der Besatzung bei Angriffen) verschlossen werden. Aus diesem Grund werden zumeist elastische Gummiringe als Dichtelemente verwendet.

Aufbauten wie Fahrzeugantennen müssen zum Blitzschutz einen Massekörper aufweisen, der mit dem Fahrzeuggehäuse elektrisch leitend verbunden ist, damit im Falle eines Blitzeinschlags der elektrische Strom abgeführt werden kann.

Der Massekörper einer Antenne wird zumeist über einen Masseverbinder, beispielsweise ein Kupferdraht oder ein Kupferband, mit dem Fahrzeuggehäuse verbunden. Der Masseverbinder leistet einen definierten Übergang von dem Massekörper auf das Fahrzeuggehäuse, der nicht durch Verunreinigungen, Korrosion, Feuchtigkeit oder unzureichenden Anpressdruck im Bereich der Befestigungsvorrichtung oder des Dichtungselements beeinflusst wird. Einen solchen Masseverbinder zeigt beispielsweise die DE 10 2004 034 214 A1. Hierbei wird das Masseband mit einer Außenseite des Fahrzeuggehäuses verbunden.

Ein Nachteil, das Masseband an der Außenseite des Fahrzeuggehäuses anzubringen, besteht darin, dass das Masseband nicht gegen äußere Einflüsse geschützt ist. Aus diesem Grund besteht auch die Möglichkeit, das Masseband durch die Öffnung hindurchzuführen und an einer Innenseite des Fahrzeuggehäuses anzubringen. Hierbei besteht der Nachteil, dass die Montage der Massebänder arbeitsaufwändig ist, beziehungsweise an unzugänglichen Stellen sogar unmöglich ist.

Grundsätzlich besteht zudem bei Massebändem, die beispielsweise auf Butzen befestigt sind, der Nachteil, dass durch diesen Aufbau die Elemente eine elektrochemische Spannungsreihe bilden und somit anfällig für Korrosion sind, wodurch der Übergangswiderstand negativ beeinflusst wird.

Die Erfindung hat die Aufgabe, die Blitzableitung an einem Fahrzeugaufbau wie einer Fahrzeugantenne auf das Fahrzeuggehäuse zu vereinfachen.

Die Erfindung löst die Aufgabe mit den Merkmalen aus dem kennzeichnenden Teil des Patentanspruchs 1. Vorteilhafte Weiterbildungen sind Bestandteil der abhängigen Ansprüche.

Ein Grundgedanke der Erfindung besteht darin, dass der Massekörper über das Dichtungselement, das zugleich einen dichten Verschluss der Öffnung des Fahrzeugsgehäuses bewirkt, mit dem Fahrzeuggehäuse elektrisch leitend verbunden ist. Aus diesem Grund besteht das Dichtungselement, insbesondere ein Dichtungsring, aus Metall. Somit kann ein definierter Übergang zwischen dem Massekörper und dem Fahrzeuggehäuse erreicht werden, so dass auf einen anfälligen und aufwändig zu montierenden Masseverbinder verzichtet werden kann.

Um auch eine Gasdichtigkeit zu erreichen, kann der Dichtungsring eine metallische Spiralfeder aufweisen, die insbesondere mit einer metallenen Ummantelung versehen ist. Solche Dichtungselemente sind an sich bekannt und werden beispielsweise in der WO 03/071171 A1 und der DE 101 19 534 A1 beschrieben.

Besonders vorteilhaft ist es, wenn die Ummantelung aus einem Metall mit einer hohen elektrischen Leitfähigkeit besteht. Aus diesem Grund sind insbesondere Gold, Silber, Kupfer, Aluminium und nichtrostender Stahl vorteilhaft.

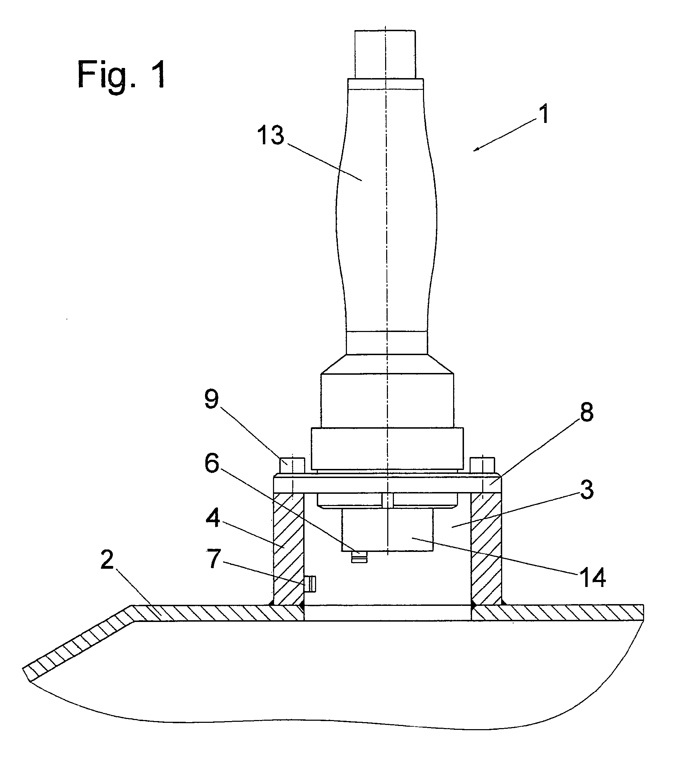

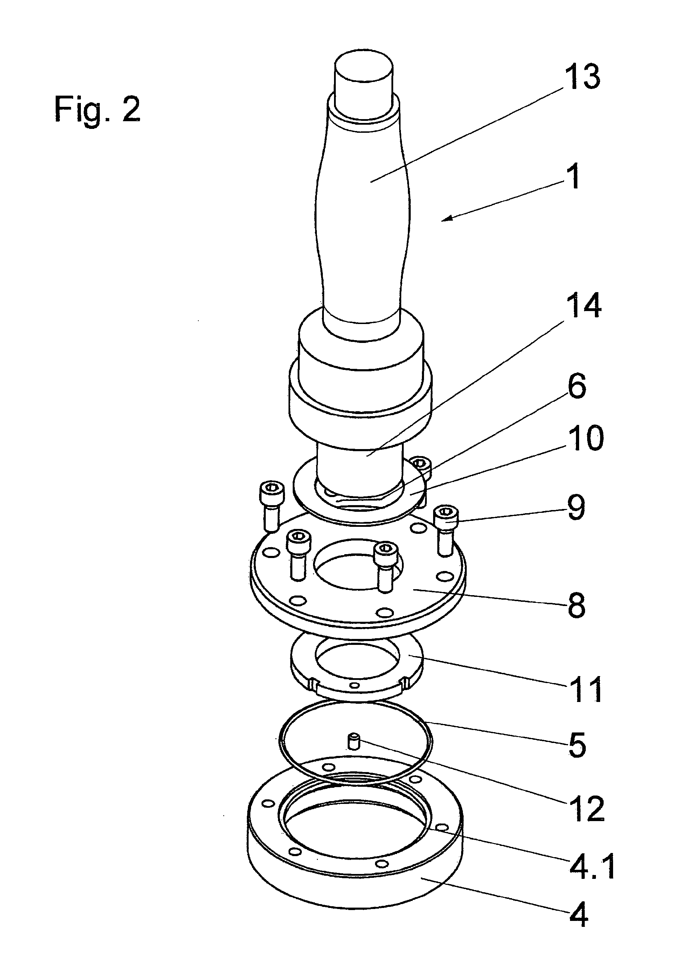

Ein vorteilhaftes Ausführungsbeispiel der Erfindung wird anhand der Figuren 1 und 2 beschrieben. Es zeigen:
Fig. 1 eine an einem Fahrzeug angeordnete Antenne in einer Seitenansicht; und
Fig. 2 die Antenne aus Fig. 1 in einer Explosionsdarstellung.

In der Fig. 1 ist eine Antenne 1 mit einem Antennenkörper 13 und einem Massekörper 14 als Beispiel für einen Fahrzeugaufbau dargestellt, die an einem Fahrzeuggehäuse 2 eines nicht weiter dargestellten Fahrzeuges angeordnet ist. Mit dem Fahrzeuggehäuse 2 ist ein zylindrischer Aufsatz 4 aus Metall fest verbunden. Über der Öffnung 3 des zylindrischen Aufsatzes 4 ist die Antenne 1 angeordnet. Die Antenne 1 weist als Befestigungselement eine Befestigungsplatte 8 aus Metall auf, die über Schrauben 9 mit dem Aufsatz 4 fest verbunden ist.

Nach Fig. 2 ist der Antennenkörper 13 über die Flachdichtung 10 sowie die mit einem Gewinde des Massekörpers 14 zusammenwirkende Mutter 11, die mit dem Gewindestift 12 fixiert wird, mit der Befestigungsplatte 8 verbunden. Im zusammengebauten Zustand ist der Massekörper 14 elektrisch leitend mit der Befestigungsplatte 8 verbunden.

Der Massekörper 14 weist einen Masseanschluss 6 auf. Bei den bekannten Ausführungen konnte zum Blitzschutz dieser Masseanschluss 6 über einen Masseverbinder mit einem an dem Aufsatz 4 angeordneten Anschluss 7 verbunden werden. Da dieser Bereich jedoch schlecht zugänglich ist, wird nunmehr erfindungsgemäß ein metallener Dichtungsring 5 in eine Nut 4.1 des Aufsatzes 4 bei der Montage der Antenne 1 eingebracht. Der Dichtungsring 5 besteht aus einer metallenen Spiralfeder, die mit einem elektrisch gut leitenden Material wie Kupfer ummantelt ist. Bei dem Festziehen der Schrauben 9 verformt sich der Dichtungsring 5 und bildet einen gasdichten Verschluss der Öffnung 3. Gleichzeitig wird eine definierte elektrische Verbindung zwischen dem Massekörper 14 und dem Fahrzeuggehäuse 2 über die Befestigungsplatte 8 erreicht, so dass auf einen Masseverbinder verzichtet werden kann.

Die Nut 4.1, in die der Dichtungsring 5 eingelegt wird, sollte vor dem Einlegen gereinigt sein. Zudem sollte die Anschraubfläche des Aufsatzes 4 und die Nut 4.1 farbfrei bleiben. Ferner sollten die Schrauben mittels eines Drehmomentschlüssels mit einem vorgegebenen Drehmoment angezogen werden. Durch diese Maßnahmen kann erreicht werden, dass der Übergangswiderstand einen definierten Wert aufweist.

In den Antennenfuß, der den Massekörper 14 umfasst, ist ein Überspannungsschutz in Form eines nicht dargestellten Blitzschutzelements integriert.

## Patentansprüche

1. Blitzschutzeinrichtung an einem Aufbau, insbesondere einer Antenne (1), eines Fahrzeugs, insbesondere eines Militärfahrzeugs, wobei der Aufbau einen Massekörper (14) aufweist, der zum Blitzschutz mit dem Fahrzeuggehäuse (2) elektrisch leitend verbunden ist, und wobei der Aufbau über einer Öffnung (3) des Fahrzeugs angeordnet ist, **dadurch gekennzeichnet, dass** der Massekörper (14) über ein Dichtungselement, insbesondere einen Dichtungsring (5), aus Metall, das einen dichten, insbesondere gasdichten, Verschluss der Öffnung (3) des Fahrzeuges bewirkt, mit dem Fahrzeuggehäuse (2) elektrisch leitend verbunden ist.

2. Blitzschutzeinrichtung nach Anspruch 1, **dadurch gekennzeichnet, dass** der Dichtungsring (5) eine metallische Spiralfeder aufweist, die insbesondere mit einer metallenen Ummantelung versehen ist.

3. Blitzschutzeinrichtung nach Anspruch 2, **dadurch gekennzeichnet, dass** die Ummantelung aus Gold, Silber, Kupfer, Aluminium oder nichtrostendem Stahl besteht.
